# EUROPEAN PATENT APPLICATION

(11) **EP 4 657 621 A1**
(43) Date of publication of application: **03.12.2025**
(21) Application number: 25159623.5
(22) Date of filing: 24.02.2025
(51) Int. Cl.: H01M 50/176, H01M 50/528, H01M 50/533, H01M 50/55, H01M 50/553, H01M 50/562, H01M 50/566

(54) **SECONDARY BATTERY INCLUDING CURRENT COLLECTOR AND METHOD OF MANUFACTURING THE SAME**

(30) Priority: 27.05.2024 KR 20240068857
(71) Applicant: SAMSUNG SDI CO., LTD., Yongin-si, Gyeonggi-do 17084 (KR)
(72) Inventor: LEE, Jeongjoo, Yongin-si, Gyeonggi-do 17084 (KR); PARK, Wonkyu, Yongin-si, Gyeonggi-do 17084 (KR); KIM, Manjin, Yongin-si, Gyeonggi-do 17084 (KR)
(74) Representative: Marks & Clerk LLP

(57) **Abstract**

A secondary battery including: a case having an opening at one end portion; an electrode assembly accommodated in the case; a current collector electrically connected to the electrode assembly; and a terminal electrically connected to the current collector. The current collector includes a conductive boss connected to the terminal, and the conductive boss includes a multi-stage shape portion protruding toward the terminal. The terminal has a through-hole into which the conductive boss is inserted and which has a shape corresponding to the multi-stage shape portion.

## Description

### BACKGROUND

### 1. Field

Aspects of embodiments of the present disclosure relate to a secondary battery including a current collector and a method of manufacturing the same.

### 2. Discussion of Related Art

Different from primary batteries that are not designed to be recharged, secondary batteries are designed to be (re)charged and discharged. A secondary battery generally includes an electrode assembly including a positive electrode plate, a separator, and a negative electrode plate, a case (e.g., a can) that accommodates the electrode assembly, and external terminals through which the electrode assembly may be connected to an external power source or load.

Positive and negative electrode tabs are formed in the electrode assembly, and a current collector located inside the case is respectively bonded to each of these electrode tabs. Each current collector is electrically connected to one of positive and negative terminals located outside the case. Welding (e.g., laser welding) may be performed to electrically connect a terminal outside the case and the current collector inside the case. During welding, the terminal and the current collector should be completely aligned and welded in a state in which the terminal and the current collector are in close contact with each other. In the event of misalignment, welding quality is degraded due to low adherence, and laser beams may enter a cell during welding.

The above information disclosed in this Background section is for enhancement of understanding of the background of the present disclosure, and therefore, it may contain information that does not constitute related (or prior) art.

### SUMMARY

According to embodiments of the present disclosure, a multi-stage shape portion is formed in a conductive boss of a current collector, and a through-hole in a counterpart terminal is processed to have a shape corresponding to the multi-stage shape portion to prevent a laser beam from entering a product during welding, thereby securing the adherence of a member to be welded, which is an important factor during butt welding.

Embodiments of the present disclosure are directed to a current collector and a conductive boss that have a structure for bringing the current collector into close contact with a terminal during a process of welding the current collector and the terminal when manufacturing a secondary battery, and a structure for close contact with the terminal.

According to an embodiment of the present disclosure, a secondary battery includes a case having an opening at one end portion, an electrode assembly accommodated in the case, a current collector electrically connected to the electrode assembly, and a terminal electrically connected to the current collector. The current collector includes a conductive boss connected to the terminal, and the conductive boss includes a multi-stage shape portion protruding toward the terminal. The terminal has a through-hole into which the conductive boss is inserted and which has a shape corresponding to the multi-stage shape portion.

According to another embodiment of the present disclosure, a method of manufacturing a secondary battery includes manufacturing a case of a secondary battery and manufacturing an electrode assembly to be inserted into the case; manufacturing a cap assembly to be assembled to the case and manufacturing a terminal to be assembled to the cap assembly; manufacturing a current collector to be connected to the electrode assembly and forming a conductive boss to be coupled to the terminal, in the current collector; inserting the electrode assembly into the case; connecting the electrode assembly and the current collector; and coupling and bonding the conductive boss of the current collector to a through-hole in the terminal through welding. The forming of the conductive boss in the current collector includes forming a multi-stage shape portion that protrudes toward the terminal, in the current collector, and the manufacturing of the terminal includes forming the through-hole into which the conductive boss of the current collector is inserted and which has a shape corresponding to the multi-stage shape portion.

According to another embodiment of the present disclosure, a current collector for a secondary battery includes a conductive boss including a multi-stage shape portion that protrudes toward a terminal of a secondary battery and is bonded to the terminal.

The end portion may be a top, bottom or side of the case.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the embodiments illustrated in the drawings, in which:
FIG. 1 is a top perspective view of a secondary battery with a top-terminal structure according to some embodiments of the present disclosure;
FIG. 2 is a cross-sectional view taken along the line I-I' in FIG. 1;
FIG. 3 is an exploded perspective view showing a coupling relationship between a current collector and a cap assembly according to some embodiments of the present disclosure;
FIG. 4 is a perspective view of a secondary battery with a side-terminal structure according to other embodiments of the present disclosure;
FIG. 5 is a schematic cross-sectional view showing a coupling relationship between the current collector and a terminal shown in FIG. 3;
FIGS. 6 and 7 illustrate shapes of a conductive boss and a terminal according to some embodiments of the present disclosure before the terminal and the conductive boss are coupled and after the terminal and the conductive boss are coupled and then welded, respectively;
FIG. 8 is a top perspective view of the conductive boss shown in FIGS. 6 and 7;
FIG. 9 shows a state in which penetration of an external laser beam is blocked by an assembly portion of a conductive boss and a terminal according to some embodiments of the present disclosure;
FIGS. 10A to 10C illustrate steps of a position alignment action of a conductive boss;
FIG. 11 illustrates a state in which a clamping jig clamps a conductive boss and pulls the conductive boss upwardly;
FIG. 12 illustrates a terminal according to other embodiments of the present disclosure;
FIG. 13 illustrates a terminal according to other embodiments of the present disclosure;
FIG. 14 illustrates a terminal according to other embodiments of the present disclosure;
FIG. 15 is a view of a secondary battery module in which secondary batteries are arranged according to one or more embodiments of the present disclosure;
FIG. 16 is a view of a secondary battery pack including the secondary battery module illustrated in FIG. 15; and
FIG. 17 is a conceptual view of a vehicle including the secondary battery pack illustrated in FIG. 16.

### DETAILED DESCRIPTION OF THE DRAWINGS

Hereinafter, embodiments of the present disclosure will be described, in detail, with reference to the accompanying drawings. The terms or words used in the present specification and claims are not to be limitedly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of one or more embodiments of the present disclosure and do not represent all of the embodiments of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

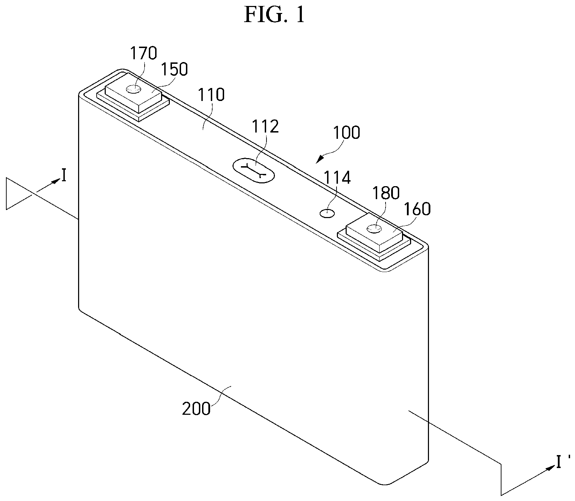

FIG. 1 is a top perspective view of a prismatic secondary battery according to some embodiments of the present disclosure.

A case 200 defines an overall (or outer) appearance of the prismatic secondary battery and may be made of a conductive metal, such as aluminum, aluminum alloy, or nickel-plated steel. In addition, the case 200 may provide a space for accommodating an electrode assembly therein.

A cap assembly 100 may include a cap plate 110 that covers an opening in the case 200. In some embodiments, the case 200 and the cap plate 110 may be made of a conductive material. A first terminal 150 and a second terminal 160 may be electrically connected to respective positive and negative (or negative and positive) electrodes inside the case 200 and may be installed to protrude outwardly from the case 200 through the cap plate 110.

The cap plate 110 may have an electrolyte injection port 114 and a vent 112 formed with a notch. The vent 112 is configured to discharge excess gas generated inside the secondary battery.

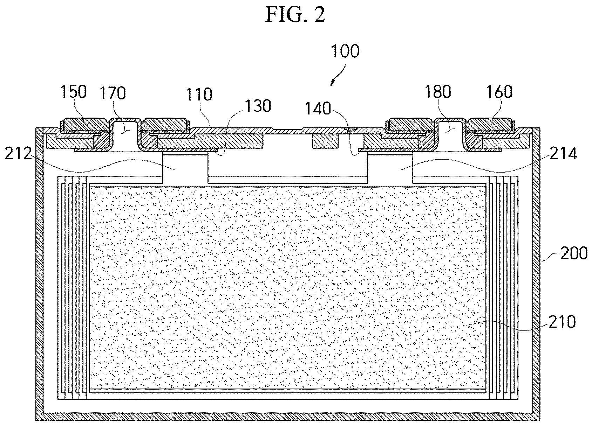

FIG. 2 is a cross-sectional view taken along the line I-I' in FIG. 1 according to some embodiments of the present disclosure.

An electrode assembly 210 may be formed by winding or stacking a stack of a first electrode plate, a separator, and a second electrode plate, each of which are formed as thin plates or films. When the electrode assembly 210 is a wound stack, a winding axis may be parallel to the longitudinal direction of the case 200. In other embodiments, the electrode assembly 210 is a stack type rather than a winding type electrode assembly, but the shape or type of the electrode assembly 210 is not limited in the present disclosure. For example, the electrode assembly 210 may be a Z-stack electrode assembly in which a positive electrode plate and a negative electrode plate are inserted into both sides of a separator, which is then bent (or folded) into a Z-stack configuration. In addition, one or more electrode assemblies 210 may be stacked such that long sides of the electrode assemblies 210 are adjacent to each other and accommodated together in the case 200, and the number of electrode assemblies 210 in the case 200 is not limited in the present disclosure. The first electrode plate of the electrode assembly 210 may act as a negative electrode, and the second electrode plate may act as a positive electrode. Of course, the reverse is also possible.

The first electrode plate may be formed by applying a first electrode active material, such as graphite, carbon, or the like, onto a first electrode current collector formed of a metal foil, such as copper, a copper alloy, nickel, a nickel alloy, or the like. The first electrode plate may include a first electrode tab 212 (e.g., a first uncoated portion) that is a region to which the first electrode active material is not applied. The first electrode tab 212 may act as a current flow path between the first electrode plate and a first current collector 130. In some embodiments, when the first electrode plate is manufactured, the first electrode tab 212 is formed by being cut in advance to protrude from one side of the electrode assembly 210 or the first electrode tab 212 may protrude to one side of the electrode assembly 210 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 214 (e.g., a second uncoated portion) that is a region to which the second electrode active material is not applied. The second electrode tab 214 may act as a current flow path between the second electrode plate and a second current collector 140. In some embodiments, the second electrode tab 214 may be formed by being cut in advance to protrude from the other side (e.g., the opposite side) of the electrode assembly 210 when the second electrode plate is manufactured or the second electrode plate may protrude to the other side of the electrode assembly 210 more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 210 is accommodated in the case 200 along with an electrolyte.

The first current collector 130 and the second current collector 140 may be welded and connected to the first electrode tab 212 extending from the first electrode plate and the second electrode tab 214 extending from the second electrode plate, respectively. In some embodiments in which the first electrode tab 212 and the second electrode tab 214 are located at both (e.g., opposite) side ends of the electrode assembly 210, the first and second current collectors 130, 140 are also located at both (e.g., opposite) side ends of the electrode assembly 210.

The first current collector 130 and the second current collector 140 may be electrically connected to the first terminal 150 and the second terminal 160 through conductive bosses 170, 180, respectively.

The secondary battery illustrated in FIG. 2 is a secondary battery having a top-tab structure in which the electrode assembly 210 is arranged so that the first electrode tab 212 and the second electrode tab 214 are positioned at the upper portion of the secondary battery. In addition, because the first terminal 150 and the second terminal 160 are positioned at the upper portion of the case 200, it may be classified as having a top-terminal structure. For example, the first electrode tab 212 and the second electrode tab 214 of the electrode assembly 210 are positioned at the upper portion within the case 200, the first current collector 130 and the second current collector 140 are respectively connected thereto, and the first terminal 150 and the second terminal 160 connected to each current collector 130, 140 are installed on the outside of the cap plate 110.

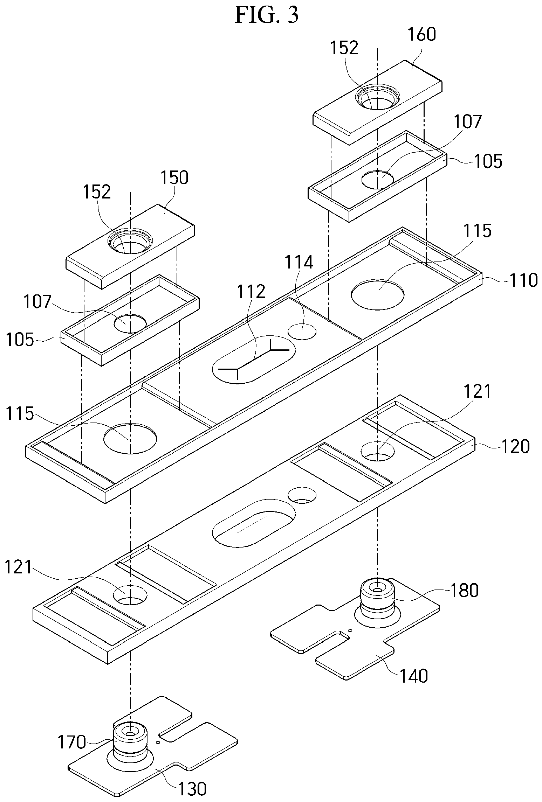

FIG. 3 is an exploded view of a connection relationship between a current collector and a cap assembly in a secondary battery with a top-tab top terminal structure such as that shown in, for example, FIG. 2.

Schematically, current collectors 130, 140 located below a cap plate 110 may be respectively connected to first and second electrode tabs 212, 214 (see, e.g.,

FIG. 2) of an electrode assembly 210 and may be respectively connected to terminals 150, 160 located on the cap plate 110. A vent 112 and an electrolyte injection port 114 may be formed in the cap plate 110.

A bottom insulator 120 may be located below the cap plate 110, and the first current collector 130 and the second current collector 140 may be located below the bottom insulator 120. A first terminal 150 and a second terminal 160 may be located on the cap plate 110 and may be electrically connected to the first and second current collectors 130 and 140, respectively.

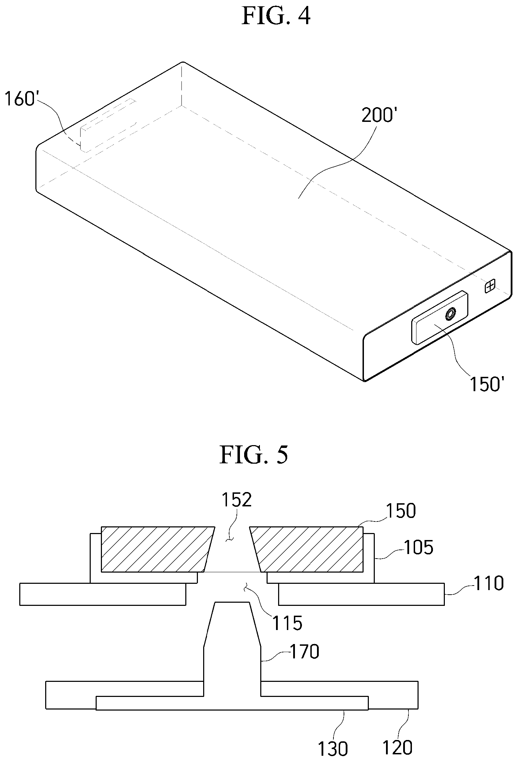

In FIG. 3, the first current collector 130 and the second current collector 140 are illustrated as having a so-called top-tab (or multi-tab) structure (in which electrode tabs 212,214 of the electrode assembly are located on the electrode assembly 210 as described above with reference to FIG. 2). However, the present disclosure is not limited to the top-tab structure, and the first and second current collectors 130, 140 may also be applied to, for example, a battery with a side-tab structure as shown in, for example, FIG. 4.

According to embodiments of the present disclosure, the first and second terminals 150, 160 located on the cap plate 110 are electrically connected to the first and second current collectors 130, 140 via the conductive bosses 170, 180 provided on the first and second current collectors 130, 140, respectively. The first terminal 150 and the second terminal 160 may be welded to the conductive bosses 170, 180 and electrically connected to the first and second current collectors 130, 140, respectively.

In FIG. 3, an insulator 105 may be interposed between the first terminal 150 and/or the second terminal 160 and a surface of the cap plate 110 below the first terminal 150 and/or the second terminal 160. The insulator 105 prevents a short circuit between a positive terminal when the case has negative polarity (and vice versa).

Through-holes 121, 115, 107, and 152 through which the conductive bosses 170, 180 of the first current collector 130 and the second current collector 140 located at the lowermost side may pass may be formed in components of the cap assembly, for example, the bottom insulator 120, the cap plate 110, the insulator 105 and the first terminal 150 and the second terminal 160, respectively. The conductive bosses 170, 180 that pass through the through-holes 121, 115, 107, and 152 may be electrically connected to the first and second terminals 150, 160 by being coupled to the through-holes 152 in the first and second terminals 150, 160 located at the uppermost side, respectively.

For simplicity of description, hereinafter, the first and second current collectors 130, 140 will be collectively referred to as the current collector 130, and the first terminal 150 and the second terminal 160 will be collectively referred to as the terminal 150.

FIG. 4 illustrates a secondary battery with a side-terminal structure according to other embodiments of the present disclosure.

Different from the embodiment shown in FIGS. 1 and 2, the secondary battery with the side-terminal structure shown in FIG. 4 is a secondary battery in which a first terminal 150' and a second terminal 160' are located on respective side surfaces of both (e.g., opposite) end portions of a case 200'. Because the terminals 150', 160' are located on both side surfaces of the case 200', the arrangement of an electrode assembly and electrode tabs inside may be different from that of the secondary battery shown in FIG. 2. For example, in the embodiment shown in FIG. 4, the first electrode tab 212 and the second electrode tab 214 shown in FIG. 2 may be located at both (e.g., opposite) side end portions of the electrode assembly rather than at the upper portion as shown in FIG. 2. A secondary battery with such an internal structure is referred to as a side-tab secondary battery.

FIG. 5 is a schematic cross-sectional view of a coupling relationship between the current collector 130 and the terminal 150 shown in FIG. 3 and illustrates a state before the current collector 130 and the terminal 150 are coupled. Basically, FIG. 5 briefly illustrates the current collector 130 and the terminal 150 shown in FIG. 3 in a pre-assembly state. However, the structure shown in FIG. 5 is commonly applicable to both the top terminal structure as shown in FIG. 2 and the side terminal structure as shown in FIG. 4.

In FIG. 5, a main body of the current collector 130 located below the cap plate 110 (that is, inside the case 200 of the secondary battery) may be connected to the electrode tab (see, e.g., FIG. 2) of the electrode assembly in the case 200, and the conductive boss 170 of the current collector 130 may be connected to the terminal 150 located on the cap plate 110 (that is, outside the case 200 of the secondary battery). That is, the conductive boss 170 of the current collector 130 may pass through the through-hole 115 in the cap plate 110 and may be inserted into and welded to the through-hole 152 in the terminal 150 located on the cap plate 110. The current collector 130 and the cap plate 110 may be electrically insulated from each other by the bottom insulator 120.

In this way, the current collector 130 inside the case and the terminal 150 outside the case 200 may be in contact with each other and welded (e.g., laser-welded) and electrically connected through the conductive boss 170.

Ensuring the positional alignment and adherence between the through-hole 152 in the terminal 150 and the conductive boss 170 when the terminal 150 and the conductive boss 170 are welded increases the physical rigidity of the welded portions after welding and prevents degradation in electrical performance.

Because a conductive boss of a conventional current collector has a simple shape (e.g., a trapezoidal column shape), when the conductive boss is misaligned with a terminal when the conventional current collector is assembled with a cap plate to manufacture a cap assembly, adherence may be reduced, which degrades welding quality, and a laser beam may enter a cell during laser welding.

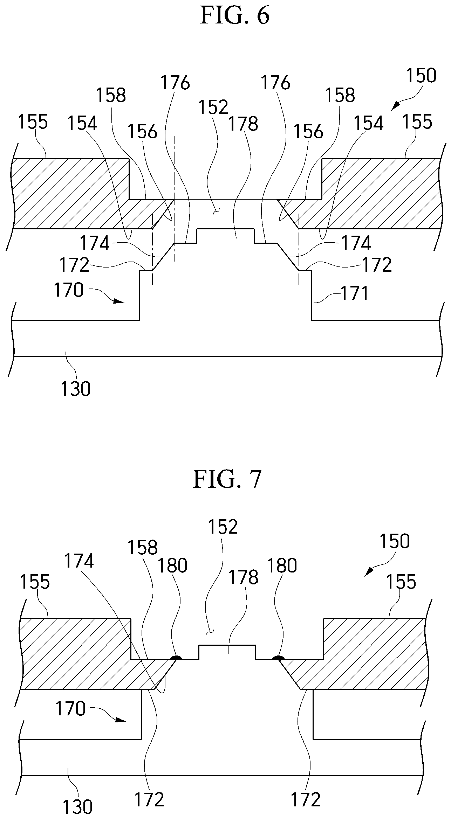

FIGS. 6 and 7 illustrate shapes of the conductive boss 170 of the current collector 130 and the terminal 150 according to some embodiments of the present disclosure. FIG. 6 shows a state before the conductive boss 170 of the current collector 130 is coupled to the through-hole 152 in the terminal 150, and FIG. 7 shows a state in which the conductive boss 170 of the current collector 130 is coupled to the through-hole 152 in the terminal 150 and welded. In FIGS. 6 and 7, peripheral members or components, such as the cap plate 110 and the insulators 105 and 120 shown in FIG. 5, are omitted for clarity.

The shapes of the conductive boss 170 and the terminal 150 shown in FIGS. 6 and 7 prevent a laser beam from entering a battery through a gap between the terminal 150 and the conductive boss 170 during welding and also secure adherence between members to be welded (that is, the conductive boss 170 and the terminal 150), which are important considerations during butt welding. Schematically, a multi-stage (e.g., multi-diameter or multi-width) shape portion protruding from the current collector 130 towards the terminal is formed as the conductive boss 170 of the current collector 130, and the through-hole 152 in the terminal 150 is formed in a shape corresponding to the multi-stage shape portion.

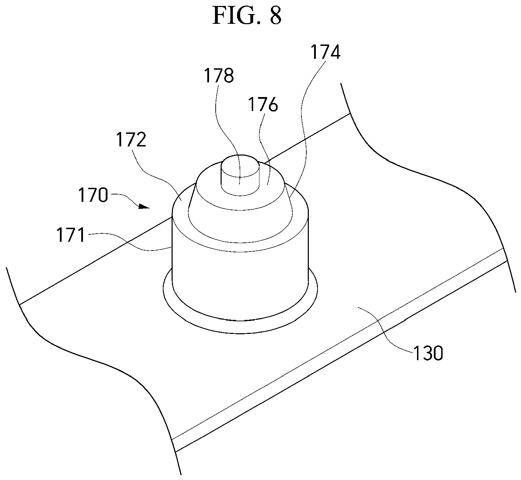

An embodiment of the conductive boss 170 and the terminal 150 will be described with reference to FIGS. 6 and 7 along with FIG. 8.

First, the conductive boss 170 may include an annular first flat portion 172, which rises (or extends) along a vertical wall 171 protruding from a surface of the current collector 130 to be formed below an uppermost portion, an annular second flat portion 176, which has a smaller diameter than the first flat portion 172 and is formed at a higher level than the first flat portion 172 (e.g., farther away from the current collector 130), an annular inclined portion 174 which connects (or extends between) an inner circumference of the first flat portion 172 and an outer circumference of the second flat portion 176, and a circular upper protrusion 178, which protrudes above the second flat portion 176 and has a smaller diameter than the second flat portion 176.

The through-hole 152 in the terminal 150 may have a shape that substantially corresponds to the shape of the conductive boss 170. For example, the through-hole 152 in the terminal 150 may have a lower surface 154 with which the first flat portion 172 of the conductive boss 170 contacts and an inclined surface 156 with which the inclined portion 174 of the conductive boss 170 contacts. Additionally, the through-hole 152 in the terminal 150 may have an intermediate surface 158 that is substantially coplanar with the second flat portion 176 of the conductive boss 170. The intermediate surface 158 may be located between the uppermost surface 155 and the lower surface 154 of the terminal 150. The uppermost surface 155 of the terminal 150 may be located at a higher level than an upper surface of the upper protrusion 178 of the conductive boss 170, but the present disclosure is not limited thereto.

The first flat portion 172 of the conductive boss 170 prevents a laser beam from entering a battery when the terminal 150 and the conductive boss 170 are welded. The inclined portion 174 of the conductive boss 170 allows the conductive boss 170 to be seated at a correct position (e.g., properly aligned) when the terminal 150 and the conductive boss 170 are assembled (e.g., position alignment action). The second flat portion 176 of the conductive boss 170 forms a flat welding surface to ensure sufficient welding to the terminal 150 (ensuring flatness). The upper protrusion 178 of the conductive boss 170 is clamped by a jig such that the conductive boss 170 is completely brought into close contact with the through-hole 152 in the terminal 150 to maximize a welding effect (ensuring adherence).

When the conductive boss 170 and the through-hole 152 in the terminal 150 having such a structure are coupled, the conductive boss 170 and the through-hole 152 in the terminal 150 may be in the state shown in FIG. 7. In FIG. 7, a welded portion 180 is formed by performing welding at a location at where the terminal 150 and the conductive boss 170 are in contact with each other and exposed to the outside.

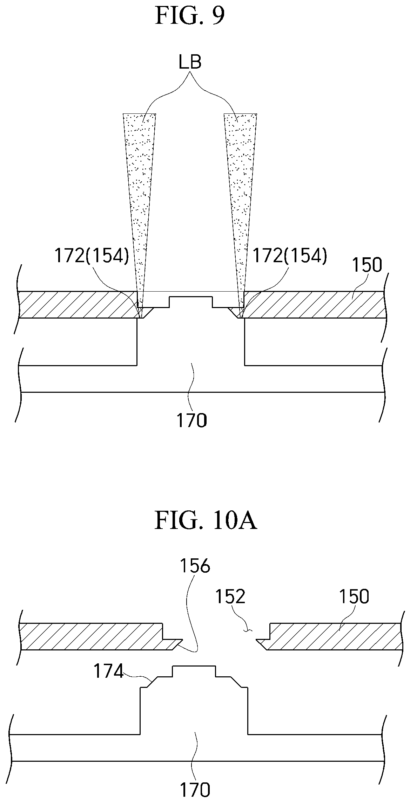

FIG. 9 illustrates a state in which penetration of an external laser beam LB is blocked by the first flat portion 172 of the conductive boss 170 and the lower surface 154 of the terminal 150. In the related art, when a conductive boss and a terminal are welded, there is frequently a problem of a laser beam entering diagonally through a gap and penetrating into a battery. However, according to embodiments of the present disclosure, as shown in, for example, FIG. 9, the lower surface 154 of the terminal 150 and the first flat portion 172 of the conductive boss 170 may be in coplanar contact with each other to form a blocking wall perpendicular to the laser beam LB so that the laser beam LB cannot enter a battery below the terminal 150 during welding. Moreover, according to embodiments of the present disclosure, because the conductive boss 170 protrudes as a multi-stage shape portion, the possibility of the laser beam LB reaching the battery is further reduced.

FIGS. 10A to 10C describe a position alignment action of the inclined portion 174 of the conductive boss 170.

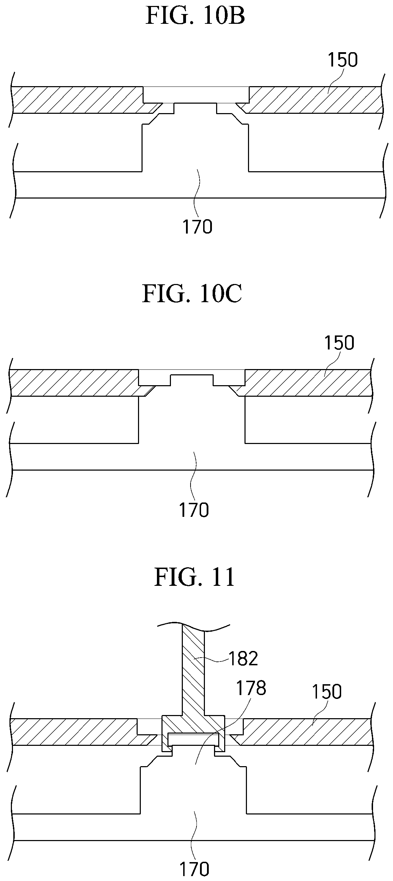

FIG. 10A shows a state before the conductive boss 170 of the current collector 130 is coupled to the through-hole 152 of the terminal 150 in which the conductive boss 170 and the through-hole 152 are located on different axes (e.g., are misaligned). In FIG. 10B, the conductive boss 170 is misaligned with the through-hole 152 in the terminal 150 but begins to enter the through-hole 152 in the terminal 150. In FIG. 10C, the inclined portion 174 of the conductive boss 170 slides along the inclined surface 156 of the through-hole 152 in the terminal 150 to enter the through-hole 152 and is coupled at a correct position (e.g., is aligned in the through-hole 152).

FIG. 11 illustrates a state in which the upper protrusion 178 located above the second flat portion 176 of the conductive boss 170 is clamped and pulled upwardly by a clamping jig 182.

For good welding quality, the adherence between the conductive boss 170 and the terminal 150 is important. To this end, the upper protrusion 178 of the conductive boss 170 is clamped and pulled upwardly by using the jig 182 such that the conductive boss 170 is brought into close contact with the through-hole 152 in the terminal 150 to be welded.

Hereinafter, various embodiments of the conductive boss 170 and the terminal 150 will be described.

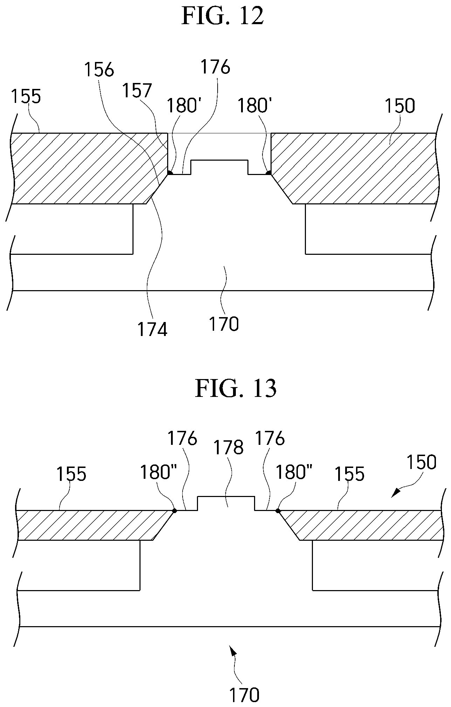

The terminal 150, according to embodiment shown in FIG. 12, may have a configuration in which the intermediate surface 158 disposed between the uppermost surface 155 and the lower surface 154 of the terminal 150 in the embodiment shown in FIGS. 6 and 7 is omitted, and the through-hole 152 in the terminal 150 has a vertical inner wall 157 located approximately perpendicular to the second flat portion 176 of the conductive boss 170 to form edges. Therefore, the edges may be bonded through welding to form welded portions 180'.

In the terminal 150, according to embodiment shown in FIG. 13, the uppermost surface 155 is coplanar with the second flat portion 176 of the conductive boss 170. Accordingly, the upper protrusion 178 of the conductive boss 170 protrudes above the uppermost surface 155 of the terminal 150. In the illustrated embodiment, the uppermost surface 155 of the terminal 150 and the second flat portion 176 of the conductive boss 170 may form welded portions 180" that are coplanar therewith. In addition, because the upper protrusion 178 is exposed above the terminal 150, by using riveting, together with welding or instead of welding, the upper protrusion 178 may be pressed and bonded by using a riveting machine. In addition, the internal shape of the through-hole 152 of the terminal 150 is simplified, thereby providing cost reduction.

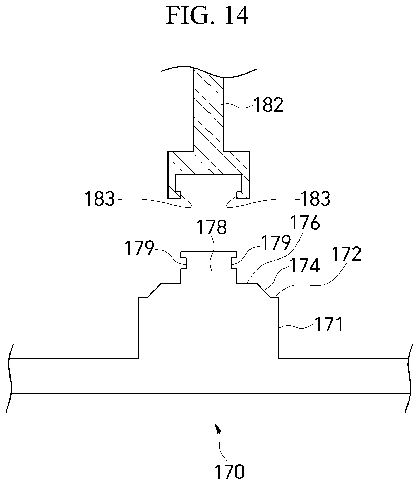

In the embodiment shown in FIG. 14, a groove 179 is formed around or in a portion of the upper protrusion 178 of the conductive boss 170. When a clamping tooth 183 of the jig 182 is engaged with the groove 179, a bonding force therebetween increases, and adherence between the terminal 150 and the conductive boss 170 can be improved without malfunction when the conductive boss 170 is pulled upwardly.

The conductive boss 170 and the terminal 150, according to the embodiments described above, can be commonly applied to the secondary battery with the top-tab structure shown in FIG. 2 and the side-tab structure shown in FIG. 4 and can also be applied to other secondary batteries (e.g., cylindrical batteries or coin-type batteries) with different structures that require connection between a current collector and a terminal.

Hereinafter, a method of manufacturing a secondary battery including the above-described current collector will be described.

A method of manufacturing a secondary battery, according to embodiments of the present disclosure, includes manufacturing a case 200 of a secondary battery and manufacturing an electrode assembly 210 (see, e.g., FIG. 2) to be inserted into the case 200; manufacturing a cap assembly 100 (see, e.g., FIG. 1) to be assembled to the case 200 and manufacturing a terminal 150 (see, e.g., FIG. 6) to be assembled to the cap assembly 100; manufacturing a current collector 130 (see, e.g., FIG. 6) to be connected to the electrode assembly 210 and forming a conductive boss 170 (see, e.g., FIG. 6), which is to be coupled to the terminal 150, in the current collector 130; inserting the electrode assembly 210 into the case 200; connecting the electrode assembly 210 and the current collector 130; and coupling and bonding the conductive boss 170 of the current collector 130 to a through-hole 152 (see, e.g., FIG. 6) in the terminal 150 via welding. The forming of the conductive boss 170 in the current collector 130 may include forming a multi-stage shape portion, which protrudes towards the terminal 150, in the current collector 130. The manufacturing of the terminal 150 may include forming a through-hole into which the conductive boss 170 of the current collector 130 is inserted and which has a shape corresponding to the multi-stage shape portion.

In some embodiments, the forming of the multi-stage shape portion in the conductive boss 170 may include forming a first flat portion 172 on a vertical wall 171 protruding from a surface of the current collector 130, forming a second flat portion 176 located at a higher level than the first flat portion 172 and having a smaller diameter than the first flat portion 172, and forming an inclined portion 174 connecting (e.g., extending between) the first flat portion 172 and the second flat portion 176.

In other embodiments, the forming of the multi-stage shape portion in the conductive boss 170 may further include forming an upper protrusion 178, which has a smaller diameter than the second flat portion 176, on the second flat portion 176. In some embodiments, the forming of the upper protrusion 178 may include forming a groove around or in a portion of the upper protrusion 178.

In some embodiments, the forming of the through-hole in the terminal 150 may include forming a lower surface 154 with which the first flat portion 172 of the conductive boss 170 contacts, and forming an inclined surface 156 with which the inclined portion 174 of the conductive boss 170 contacts. In addition, in other embodiments, the forming of the through-hole in the terminal 150 may additionally include forming an intermediate surface 158, which is coplanar with the second flat portion 176 of the conductive boss 170 and is located between the uppermost surface 155 and the lower surface of the terminal 150 and welding this intermediate surface 158 and the second flat portion 176 of the conductive boss 170.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

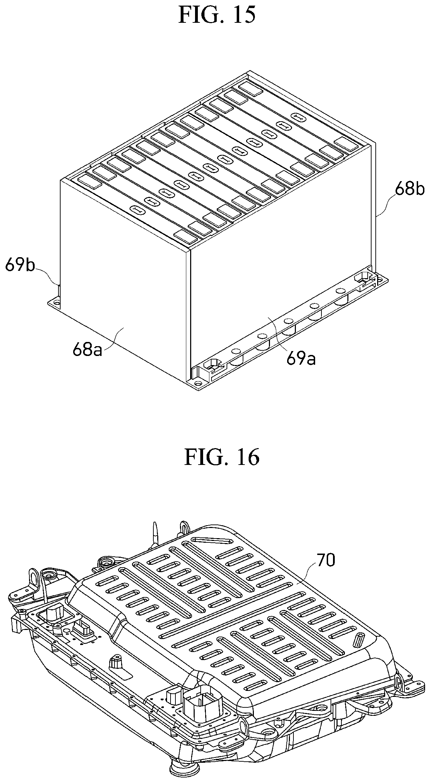

FIG. 15 is a perspective view of a secondary battery module in which prismatic secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a, 68b and a pair of facing side plates 69a, 69b. The secondary batteries may be arranged in an arrangement (direction) and number to obtain desired voltage and current specifications.

FIG. 16 is a perspective view of a battery pack 70 according to embodiments of the present disclosure. Referring to FIG. 16, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

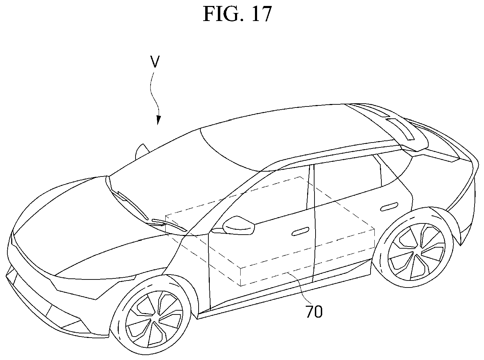

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 17 shows a vehicle V that includes the battery pack 70 shown in FIG. 16 on the lower body thereof. The vehicle V may operate by (e.g., may be powered by) receiving power from the battery pack 70.

According to embodiments of the present disclosure, a conductive boss of a current collector has a multi-stage structure to prevent a laser beam from entering a battery during welding, secure the adherence between members to be welded, that is, a terminal and the current collector, which are important factors during butt welding, and secure position alignment during assembly, thereby improving battery performance, extending its lifespan, improving welding quality, and increasing productivity.

Although the present disclosure has been described above with respect to some embodiments thereof, the present disclosure is not limited thereto. Various suitable modifications and variations can be made thereto by those skilled in the art within the scope of the present disclosure, as defined by the following claims and equivalents thereof.

## Claims

1. A current collector for a secondary battery,
wherein the current collector is configured to be electrically connected to an electrode assembly of the secondary battery and comprises:
a conductive boss,
wherein the conductive boss is configured to be connected to a terminal of the secondary battery, and
wherein the conductive boss comprises a multi-stage shape portion configured to protrude towards the terminal.

2. A secondary battery comprising:
a case having an opening at one end portion;
an electrode assembly accommodated in the case;
the current collector of claim 1,
wherein the current collector is electrically connected to the electrode assembly; and
a terminal electrically connected to the current collector,
wherein the conductive boss is connected to the terminal,
wherein the multi-stage shape portion protrudes toward the terminal, and
wherein the terminal has a through-hole into which the conductive boss is insertable and which has a shape corresponding to the multi-stage shape portion.

3. The secondary battery as claimed in claim 2, wherein the multi-stage shape portion of the conductive boss comprises:
a first flat portion formed on a vertical wall protruding from a surface of the current collector;
a second flat portion formed at a higher level than the first flat portion and having a smaller diameter than the first flat portion; and
an inclined portion extending between the first flat portion and the second flat portion.

4. The secondary battery as claimed in claim 3, wherein the multi-stage shape portion of the conductive boss further comprises an upper protrusion protruding above the second flat portion and having a smaller diameter than the second flat portion.

5. The secondary battery as claimed in claim 3 or 4, wherein the through-hole in the terminal has:
a lower surface with which the first flat portion of the multi-stage shape portion of the conductive boss contacts; and
an inclined surface with which the inclined portion of the conductive boss contacts.

6. The secondary battery as claimed in claim 5, wherein the through-hole in the terminal has an intermediate surface that is coplanar with the second flat portion of the multi-stage shape portion of the conductive boss and is arranged between an uppermost surface and the lower surface of the terminal, and
wherein the intermediate surface and the second flat portion of the conductive boss are bonded through welding.

7. The secondary battery as claimed in claim 3 or 4, wherein the through-hole in the terminal has a vertical inner wall forming an edge with the second flat portion of the multi-stage shape portion of the conductive boss, and
wherein the edge is bonded through welding.

8. The secondary battery as claimed in claim 3 or 4, wherein an uppermost surface of the terminal is located to be coplanar with the second flat portion of the multi-stage shape portion of the conductive boss, and
the uppermost surface and the second flat portion are bonded through welding.

9. The secondary battery as claimed in claim 4, 5, 6 or 7, wherein an uppermost surface of the terminal is located at a higher level than an upper surface of the upper protrusion of the multi-stage shape portion of the conductive boss.

10. The secondary battery as claimed in claim 4, wherein the upper protrusion has a groove.

11. A method of manufacturing a secondary battery, the method comprising:
manufacturing a case of a secondary battery and manufacturing an electrode assembly to be inserted into the case;
manufacturing a cap assembly to be assembled to the case and manufacturing a terminal to be assembled to the cap assembly;
manufacturing a current collector to be connected to the electrode assembly and forming a conductive boss, which is to be coupled to the terminal, in the current collector;
inserting the electrode assembly into the case;
connecting the electrode assembly and the current collector; and
coupling and bonding the conductive boss of the current collector to a through-hole in the terminal through welding,
wherein the forming of the conductive boss in the current collector comprises forming a multi-stage shape portion that protrudes toward the terminal in the current collector, and
wherein the manufacturing of the terminal comprises forming the through-hole into which the conductive boss of the current collector is inserted and which has a shape corresponding to the multi-stage shape portion.

12. The method as claimed in claim 11, wherein the forming of the multi-stage shape portion in the conductive boss comprises:
forming a first flat portion on a vertical wall protruding from a surface of the current collector;
forming a second flat portion located at a higher level than the first flat portion and having a smaller diameter than the first flat portion; and
forming an inclined portion extending between the first flat portion and the second flat portion.

13. The method as claimed in claim 11, wherein the forming of the multi-stage shape portion in the conductive boss further comprises forming an upper protrusion that has a smaller diameter than the second flat portion on the second flat portion,
and wherein optinally the forming of the upper protrusion comprises forming a groove in the upper protrusion.

14. The method as claimed in claim 12 or 13, wherein the forming of the through-hole in the terminal comprises:
forming a lower surface with which the first flat portion of the multi-stage shape portion of the conductive boss contacts; and
forming an inclined surface with which the inclined portion of the multi-stage shape portion of the conductive boss contacts.

15. The method as claimed in claim 14, wherein the forming of the through-hole in the terminal further comprises:
forming an intermediate surface that is coplanar with the second flat portion of the multi-stage shape portion of the conductive boss and is arranged between an uppermost surface and the lower surface of the terminal; and
welding the intermediate surface and the second flat portion of the multi-state shape portion of the conductive boss.
